# FASCICULE DE BREVET EUROPEEN

(11) **EP 2 183 571 B1**
(45) Date de publication et mention de la délivrance du brevet: **13.04.2011**
(21) Numéro de dépôt: 08845379.0
(22) Date de dépôt: 14.08.2008
(51) Int. Cl.: G01N 21/33, G01N 21/35, G01M 15/10

(54) **DISPOSITIF DE GESTION CENTRALISÉE DES MESURES ET DE L'INFORMATION RELATIVES À DES FLUX LIQUIDES ET GAZEUX NÉCESSAIRES AU FONCTIONNEMENT D'UN MOTEUR THERMIQUE**
VORRICHTUNG ZUR ZENTRALEN VERWALTUNG VON MESSUNGEN UND DATEN IN ZUSAMMENHANG MIT ZUM BETRIEB EINES VERBRENNUNGSMOTORS ERFORDERLICHEN FLÜSSIGKEITS- UND GASFLÜSSEN
DEVICE FOR THE CENTRALIZED MANAGEMENT OF MEASUREMENTS AND DATA RELATING TO THE LIQUID AND GAS FLOWS NEEDED FOR THE OPERATION OF A COMBUSTION ENGINE

(30) Priorité: 31.08.2007 FR 0706140
(43) Date de publication de la demande: 12.05.2010
(73) Titulaire: SP3H, 13100 Aix-en-Provence (FR)
(72) Inventeur: FOURNEL Johan, F-84440 Robion (FR); LUNATI Alain, F-13580 La Fare Les Oliviers (FR)
(74) Mandataire: Jeuland, Mickaël
(86) Numéro de dépôt international: PCT/FR2008/001194
(87) Numéro de publication internationale: WO 2009/056709

(56) Documents cités:
- EP-A- 1 398 485
- EP-A- 1 538 323
- DE-A1- 3 316 862

## Description

L'invention concerne un dispositif de gestion centralisée des mesures et des informations relatives à des flux liquides et gazeux nécessaire au bon fonctionnement d'un moteur thermique et ou d'un véhicule

Les moteurs thermiques utilisent une pluralité de flux, notamment le carburant, l'huile de lubrification moteur, le liquide de refroidissement du moteur, le liquide de freins pour les véhicules, les liquides participants au post traitement des émissions polluantes (solution d'urée pour la neutralisation des oxydes d'azote par exemple, cérine pour la régénération du filtre à particules additivé).

La combustion du mélange air/carburant dans un moteur thermique entraîne des émissions de gaz à effet de serre (dioxyde de carbone) et des polluants (hydrocarbures imbrûlés, monoxyde de carbone, oxydes d'azote, particules, aldéhydes... ).

Les réglementations relatives aux émissions de gaz à effet de serre ainsi qu'aux émissions polluantes de plus en plus sévères entraînent des efforts de plus en plus importants pour les constructeurs de moteurs. La prise en compte par le contrôle moteur de la qualité des différents flux, liquides et ou gazeux, tels que le carburant, l'air admis, les gaz d'échappement et les fluides nécessaires aux différentes étapes de post traitement en particulier, tendent à se généraliser de manière à optimiser au mieux les moteurs thermiques dans le but de minimiser la consommation de carburant et donc les gaz émis à effet de serre ainsi que les émissions polluantes sur toute la durée de vie du moteur thermique et ou du véhicule équipé d'un moteur thermique.

Il est connu que la qualité des carburants influe directement sur les performances, la consommation et les émissions polluantes et gaz à effet de serre des gaz d'échappement.

A.DOUAUD met en évidence dès 1983 pour les moteurs à allumage commandé, les liens entre la qualité de l'essence, les réglages du moteur et l'apparition du phénomène de cliquetis («Éléments d'analyse du cliquetis et de ses effets» - A Douad -IFP- Oil & Gas Science and Technology Rev Vol 38 n°5 - Sept/Oct 1983). JC GUIBET en 1987, dans l'ouvrage de référence Carburants et Moteurs met en évidence les interactions entre la qualité du carburant et le moteur et leur influence dans les modèles de paramétrages et de réglage de la combustion du moteur («Carburants & Moteurs» -JC GUIBET - Rev IFP - Editions Technip tome 1 & 2 -ISBN 2-7108-0522-7). Plus récemment, en 1997, dans une publication, A. GERINI analyse la sensibilité aux paramètres gazoles d'un moteur diesel d'automobile à injection directe («Analyse de la sensiblité aux paramètres gazoles d'un moteur diesel d'automobile à injection directe" - A Gerini & Al - Revue de l'Institut Français du Pétrole Vol. 52 (1997), No. 5. pp 513-530). Enfin en 2003, N.HOCHART propose une modélisation des émissions de polluants des moteurs actuels essence, diesel pour véhicules légers ou poids lourds, en faisant varier la qualité des carburants en modifiant les bases de raffinage utilisées dans les mélanges. («Present Day Engines Polluant Emissions: Proposed Model for Refinery Bases Impact" -N Hochart & Al-Oil & Gas Science and Technology - Rev. IFP, Vol. 58 (2003), No. 1, pp. 7-32).

La composition et la qualité des carburants, bien qu'elle soit définie par des normes, notamment les normes EN 590 et EN 228 pour l'Europe, varient dans le temps. La qualité fluctue en fonction des livraisons, des distributeurs, des saisons et des réglementations en vigueur. On estime ainsi que les propriétés physico-chimiques des carburants peuvent varier de 15 à 40% ou plus autour des valeurs moyennes définies par les normes. Les normes anti-pollution devenant de plus en plus sévères, il existe un besoin de déterminer la qualité du carburant et de prendre cette dernière en compte dans le réglage des paramètres du moteur, tels que les paramètres d'injection, de combustion et de post traitement. La mesure qualitative du carburant et son utilisation par le contrôle moteur sont traitées notamment dans documents WO9408226, US2004000275, FR-2542092, US-5126570, US-5262645, US-5239860, et WO2006100377.

Dans les mêmes buts de limitation des émissions polluantes, des procédés décrivent des ajustements des paramètres de contrôle moteur en fonction de l'analyse embarquée des gaz d'échappement ; on citera notamment le document WO02095376 qui décrit un procédé à structure modulaire permettant la détection et la caractérisation des particules liquides et solides et des constituants gazeux des gaz d'échappement pouvant être utilisés pour régler le moteur et les éléments structuraux pour les gaz d'échappements.

Certains procédés de post traitement incluent l'utilisation de fluides réactifs ou catalyseurs. On citera notamment le système de conversion des oxydes d'azote par une réaction faisant intervenir une solution d'urée et le procédé de conversion des particules faisant intervenir un additif liquide. Ces procédés nécessitent l'ajout de réservoirs de stockages supplémentaires dont la volumétrie et la masse augmentent les contraintes d'encombrement et la masse du moteur thermique et ou du véhicule. Gérer au mieux l'utilisation de ces fluides devient donc stratégique afin de minimiser l'encombrement et la masse rajoutée. Pour s'assurer de l'efficacité de ces procédés de post traitement, la qualité des catalyseurs et réactifs impliqués dans ces procédés a une importance capitale ; il devient ainsi légitime d'envisager de mesurer leur qualité à l'aide d'un système embarqué.

Malgré les dispositions réglementaires ou internes prises par les distributeurs de carburants et les constructeurs de véhicules, telles que les procédures-qualité des raffineurs et distributeurs, l'affichage de la nature des carburants en station, le diamètre du bec de pistolet de distribution et le diamètre du système de remplissage du réservoir en particulier, de nombreux utilisateurs introduisent volontairement ou non un carburant non adapté dans le réservoir de leur véhicule. Un nombre croissant de véhicules est utilisé avec des produits non agréés par les constructeurs et les services de douanes, comme des huiles de fritures usagées, des huiles végétales non estérifiées, des fiouls domestiques provoquant des dégâts importants pour le groupe motopropulseur, son système d'alimentation en carburant et son système de post-traitement. Les dégradations (encrassage des injecteurs, du moteur, du réservoir, bouchage des filtres, grippage des pompes, désactivation des catalyseurs) peuvent être sévères, impactent lourdement les phases d'injections et de combustions du moteur et augmentent les émissions polluantes réglementées ou non, et peuvent mener à la casse moteur. De même certains carburants tels que les émulsions eau/gazole ou essence/alcool ou gazole/biocarburants peuvent être instables et leur qualité se dégrader dans le temps (stabilité au stockage, phénomène de démixtion entre l'essence et l'éthanol ou le gazole et le diester au-dessus de 5%). Ces diverses sources de dégradation de la nature du carburant entraînent potentiellement un accroissement de la pollution du véhicule, des dommages pour le véhicule ou tout au moins des opérations de corrections importantes. Ainsi, des concepts et procédés visent à mettre en sécurité préventive des organes du groupe motopropulseur d'un véhicule équipé d'un moteur thermique, avant ou pendant sa phase de démarrage à la suite d'une dégradation de la nature du carburant contenu dans le réservoir et le système d'alimentation en carburant. De tels concepts et systèmes impliquent la mesure qualitative du carburant idéalement dans le système d'alimentation de carburant.

On citera par exemple le procédé décrit dans le document FR0607420 visant à mettre en sécurité des organes du groupe motopropulseur suite à la détection d'une dégradation du carburant.

Les procédés de post traitement, comme le filtre à particules Diesel en particulier, contiennent des catalyseurs particulièrement sensibles aux composés Soufrés.

Ces composés soufrés rendent en effet les catalyseurs moins actifs et affectent ainsi l'efficacité des procédés de conversion des émissions polluantes du post traitement. La législation a diminué de manière très significative la teneur en soufre maximale des carburants ; le Diesel en particulier présente aujourd'hui en Europe une teneur en soufre inférieur à 50ppm et la future législation contraint cette teneur en Soufre à être inférieur à 10ppm.

Ces spécifications sur la teneur en soufre des carburants permettent aux procédés de post traitements sensibles aux composés soufrés d'allonger leurs durées de vie et de bon fonctionnement. Ceci permet aussi à ces procédés de post traitement d'évoluer en permettant d'utiliser des catalyseurs de plus en plus perfectionnés mais présentant une sensibilité aux composés soufrés accrue. Les huiles de lubrification moteur, de part leur conception, contiennent des teneurs importantes en composés soufrés. Lors du fonctionnement du moteur, une partie des composants soufrés présents dans l'huile de lubrification moteur peut participer à la combustion et ainsi parcourir la ligne de post traitement. Ces composés soufrés initialement présents dans l'huile de lubrification participent ainsi, comme ceux issus du carburant, à la désactivation des catalyseurs de post traitement. Ainsi, pour assurer, un post traitement efficace et durable, il devient important de suivre la qualité de l'huile et son évolution dans le temps. Ainsi, la qualité de l'huile de lubrification est amenée à être prise en compte par le contrôle moteur et l'optimisation du post traitement.

On citera par exemple le procédé détaillé dans le document KR20020049612 décrivant un système de mesure qualitative de l'huile moteur par des méthodes spectroscopiques.

L'allongement des durées de garanties prises en charge par les constructeurs de moteurs contraint ces derniers à rendre les moteurs thermiques plus robustes et aussi à informer au mieux et au plus tôt l'utilisateur ou les sociétés en charge de l'entretien de la nécessité d'éventuelles opérations de maintenance du moteur thermique et ou du véhicule.

En effet, pour assumer de telles garanties, il est légitime que les constructeurs s'assurent que l'utilisation du moteur thermique et ou du véhicule est conforme et non détournée et que les opérations d'entretien inhérentes au bon fonctionnement du moteur thermique et ou du véhicule telles que les vidanges d'huile de lubrification, de liquide de frein ou de liquide de refroidissement soient réalisées aux fréquences recommandées par les constructeurs.

De plus, pour un meilleur accompagnement long terme de l'utilisateur du moteur, le constructeur fournit de plus en plus à ce dernier des informations temps réel sur l'état du moteur et ses prochaines opérations de maintenance. Il peut être cité par exemple le décompte kilométrique affiché sur le tableau de bord de certains véhicules pour informer l'utilisateur sur le nombre de kilomètres restant à parcourir avant la prochaine opération de vidange d'huile de lubrification. Il est envisageable de fournir à l'utilisateur ou aux sociétés en charge de la maintenance des moteurs d'autres informations temps réelles relatives à la qualité du liquide de freins pour un véhicule et du liquide de refroidissement du moteur par exemple. De ce fait, il devient important de mesurer la qualité de ces fluides et de suivre leurs évolutions dans le temps. Les procédés classiques consistent à mesurer le taux de glycol présent dans le liquide de refroidissement et l'indice de réfraction permet de caractériser la qualité d'un liquide de frein d'un véhicule.

La mesure et le suivi de la qualité de chacun des fluides nécessaires au fonctionnement d'un moteur thermique, et notamment du carburant, des gaz d'échappement, de l'huile de lubrification, du liquide de refroidissement et du liquide de frein pour un véhicule peuvent être réalisé par différentes techniques analytiques. On citera notamment les méthodes spectroscopiques et plus principalement la spectroscopie infra rouge, proche infrarouge, Ultra violet et visible, la conductivité électrique et l'indice de réfraction.

Le document EP 1 398 485 divulgue un dispositif d'analyse des flux des gaz d'échappement d'un moteur thermique comportant une source lumineuse IR, un détecteur optique et un système d'analyse des signaux détectés.

Le document EP 1 538 323 divulgue un dispositif d'analyse des flux des gaz d'échappement d'un moteur thermique comprenant un spectrophotomètre infrarouge.

Le document DE 33 16 862 décrit un dispositif d'analyse du flux de carburant dans un moteur thermique comprenant un spectrophotomètre infrarouge.

Chacun de ces systèmes de mesure de la qualité des différents fluides permettant une meilleure gestion des paramètres du moteur, par exemple embarqué à bord d'un véhicule, doit répondre à des critères précis comme la résistance aux vibrations ou la résistance aux fortes variations de température. Ces systèmes doivent être conditionnés de manière à pouvoir fonctionner dans des environnements difficiles (poussière, suie, fumées...).

De surcroît, il sera nécessaire de développer autant d'interfaces physiques et de connectiques vers le calculateur moteur que d'analyse qualitative de chacun des flux individuellement analysés.

De plus, il est opportun d'envisager la mesure qualitative de certains flux à plusieurs endroits ; en effet, la mesure qualitative des gaz d'échappement peut être réalisée en amont et en aval des procédés de post traitement ceci dans le but notamment de s'assurer du bon fonctionnement desdits procédés.

De la même manière, il est opportun de réaliser la mesure qualitative du carburant dans la goulotte d'alimentation en carburant et dans la ligne carburant alimentant le moteur : la première localisation permettra de s'assurer de la conformité du carburant introduit dans le réservoir dans le but, le cas échéant, d'alerter l'utilisateur et ou de mettre le groupe moto propulseur en sécurité ; la seconde localisation de la mesure qualitative permettra principalement l'optimisation des paramètres de contrôle moteur.

Enfin, et notamment pour les systèmes embarqués à bord des véhicules, l'encombrement et la masse sont des contraintes importantes ; en effet, la place disponible sur un véhicule léger notamment est particulièrement restreinte et toute augmentation de la masse d'un véhicule induit notamment des augmentations de consommation de carburant.

Ainsi, mettre en oeuvre une pluralité de systèmes d'analyse qualitative des différents fluides multiplie la complexité d'intégration sur le moteur ou le véhicule et induit une augmentation de la masse du véhicule équipé.

L'invention vise à remédier à ces problèmes en proposant un dispositif de gestion centralisée des mesures et des informations relatives à des flux liquides et/ou gazeux nécessaires au bon fonctionnement d'un moteur thermique.

A cet effet et selon un premier aspect, l'invention concerne un dispositif de gestion centralisée des mesures et des informations relatives à des flux liquides et/ou gazeux nécessaires au bon fonctionnement d'un moteur thermique contrôlé par un calculateur moteur, ledit dispositif comprenant des moyens d'analyse d'au moins deux flux liquides et/ou gazeux incluant au moins une source lumineuse, au moins un détecteur optique de signaux et au moins un système d'analyse des signaux détectés, ledit dispositif étant caractérisé en ce qu'au moins un desdits moyens d'analyse est utilisé pour l'analyse de deux desdits flux.

Ainsi, certaines fonctionnalités propres à chaque système d'analyse qualitative des fluides nécessaires au fonctionnement d'un moteur thermique sont regroupées pour palier aux problématiques d'encombrement, d'intégration et d'augmentation de masse.

Avantageusement, les moyens d'analyse sont disposés sur une plateforme unique.

De préférence, le dispositif comprend une interface unique de communication avec ledit calculateur moteur, la connectique physique et/ou numérique vers le calculateur moteur étant commune aux moyens d'analyse. Ainsi, le dispositif selon l'invention est simple à installer et à intégrer dans un véhicule.

Avantageusement, les moyens d'analyse sont des moyens spectroscopiques ultraviolets, visible ou proche infrarouges. De préférence, l'analyse spectroscopique est continue ou discontinue et réalisée dans la gamme de longueur d'onde comprise entre 190 nm et 2500 nm.

La technologie proche infrarouge présente de nombreux avantages et peut notamment être utilisée pour la caractérisation de l'intégralité des fluides nécessaires au bon fonctionnement d'un moteur thermique et d'un véhicule. Depuis la fin des années 1970, de nombreux ouvrages de chimiométrie et de publications fournissent en effet la théorie de la spectroscopie proche infrarouge, des instruments et les méthodologies à mettre en oeuvre pour développer des modèles de corrélation et prédiction des propriétés des liquides à partir de leurs spectres proche infrarouge, à partir de modèles mathématiques et statistiques.

Les documents cités auparavant, WO9408226, WO2006100377, WO02095376 et KR20020049612 montrent que les qualités du carburant, de l'huile de lubrification moteur, des gaz d'échappement peuvent être caractérisés par la spectroscopie proche infrarouge. Certaines caractéristiques de ces fluides peuvent d'autre part être caractérisées par spectroscopie visible et ultraviolet.

La teneur en soufre d'un liquide hydrocarboné est communément mesurée par spectroscopie ultraviolet.

Le document WO2007006099 décrit un procédé de caractérisation de fluides organiques par la spectroscopie couplée visible et proche infrarouge.

Selon les travaux de Hassoun P., Fabre D., Bastianelli D., Bonnal L., Bocquier F.en 2005 « Utilization of polyethylene glycol 6000 (PEG) as a faecal marker measured with Near Infra Red Spectrometry (NIRS) in sheep" P. Hassoun & Al - Seminar of the FAO-CIHEAM - Catania (laly), 8-10 Sep 2005, la technologie proche infrarouge est adaptée à la détermination de la teneur en glycol d'une solution.

Les études réalisées par Peter Snoer Jensen, Søren Ladefoged, Jimmy Bak, Stefan Andersson-Engels, Stefan Andersson-Engels, Lennart Friis-Hansen « Online monitoring of urea concentration in dialysate with dual-beam Fourier- transform near-infrared spectroscopy » P. Snoer Jensen & Al - J Biomed Opt. May 1, 2004; 9(3): 553-7 montrent que la technologie proche infrarouge est adaptée à la détermination de la teneur en urée d'une solution.

D'une manière générale, Les ouvrages de référence pour le proche infrarouge comme celui de L. G. WEYER-. Appl. Spectrosc. Rev. 1985, 21, 1-43 publié en 1985 ou le « Handbook of near infrared analysis »-, Second Edition - 1992 - Donald A. Burns - ISBN 0- 8247-05334-3 publié en 1992 montre que la technologie proche infrarouge est applicable pour la caractérisation de composés organiques ; les fluides nécessaires au bon fonctionnement d'un moteur thermique de part leur composition peuvent ainsi êtres tous caractérisés par cette technologie proche infrarouge. De plus la technologie proche infrarouge présente les avantages de ne pas nécessiter d'étape de dilution de l'échantillon et d'être une méthode d'analyse non destructrice.

Enfin, le proche infrarouge permet d'utiliser la même gamme de longueur d'onde pour collecter les spectres proches infrarouges de différents produits liquides et gazeux ; seule la longueur du trajet optique (longueur d'échantillon traversé par le flux lumineux) varie. En effet, la longueur du trajet optique pour la détermination qualitative d'un gaz sera largement supérieure à la longueur du trajet optique utilisé pour caractériser un liquide en accord avec la loi de Beer Lambert.

La technologie proche infrarouge combinée à celle des fibres optiques offre de nombreuses possibilités d'architecture optique.

Avantageusement, les moyens d'analyse des flux liquides et/ou gazeux sont des moyens d'analyse du carburant, de l'huile de lubrification moteur, des gaz d'échappement, de l'air admis, des différents réactifs et catalyseurs de post traitement, du liquide de refroidissement du moteur et du liquide de frein.

Avantageusement, le dispositif comprend des moyens pour analyser un même flux liquide ou gazeux à différents endroits.

Ainsi, il est envisageable de mesurer un flux en amont et en aval d'un procédé (exemple : post-traitement des gaz), afin de vérifier le bon fonctionnement du procédé.

Avantageusement, le dispositif est équipé de moyens de réception d'instructions de gestion des moyens d'analyse provenant du calculateur moteur.

Avantageusement, les moyens d'analyse sont alimentés par une alimentation électrique commune.

Avantageusement, le dispositif comprend un système commun, électronique ou numérique, de pilotage des moyens d'analyse.

Avantageusement, le dispositif comprend un système commun d'alimentation électrique des moyens d'analyse.

Dans un mode de réalisation, les moyens d'analyse incluent une source lumineuse commune pour l'analyse des flux liquides et/ou gazeux.

Dans un second mode de réalisation, les moyens d'analyse incluent un détecteur commun pour l'analyse des flux liquides et/ou gazeux.

Dans un troisième mode de réalisation, chaque flux peut être analysé par l'intermédiaire d'une source lumineuse et d'un détecteur communs à l'ensemble des flux. Dans ce cas, le dispositif comprend un commutateur permettant de procéder séquentiellement à l'analyse des flux liquides et/ou gazeux. Dans un mode de réalisation, le commutateur est un commutateur micromécanique MEMS à membrane ou micro-miroir mobile, permettant d'orienter successivement le flux lumineux, et disposé entre la source et les flux liquides et/ou gazeux ou entre les flux liquides et/ou gazeux et le détecteur.

Ainsi, ces différents modes de réalisation permettent notamment d'utiliser la même source lumineuse et/ou le même détecteur de manière à regrouper les différents composants afin de pallier aux problématiques d'encombrement, d'intégration et d'augmentation de masse.

Dans un quatrième mode de réalisation, les moyens d'analyse comprennent, pour chaque flux liquide et/ou gazeux, une source et un détecteur distinct.

Selon un second aspect, l'invention concerne un véhicule équipé d'un dispositif de gestion selon le premier aspect de l'invention.

D'autres objets et avantages de l'invention apparaîtront au cours de la description qui suit, faite en référence aux figures annexées, dans lesquelles :
- la figure 1 représente une vue d'ensemble d'un système d'analyse de différents fluides nécessaires au bon fonctionnement d'un moteur thermique ;
- la figure 2 est une première représentation schématique d'une architecture optique pour l'analyse de différents fluides nécessaires au bon fonctionnement d'un moteur thermique dans laquelle on utilise plusieurs sources lumineuses et plusieurs détecteurs ;
- la figures 3 est une seconde représentation schématique d'une architecture optique dans laquelle on utilise une source lumineuse commune et plusieurs détecteurs ;
- la figures 4 est une troisième représentation schématique d'une architecture optique dans laquelle on utilise plusieurs sources lumineuses et un seul détecteur commun ;
- la figures 5 est une quatrième représentation schématique d'une architecture optique dans laquelle on utilise une source lumineuse commune et un détecteur commun, le flux lumineux étant orienté vers un des flux à analyser par un commutateur; et
- la figures 6 est une cinquième représentation schématique d'une architecture optique dans laquelle on utilise une source lumineuse commune et un détecteur commun, la lumière transmise à travers chaque échantillon de fluide étant ensuite dirigée vers un commutateur.

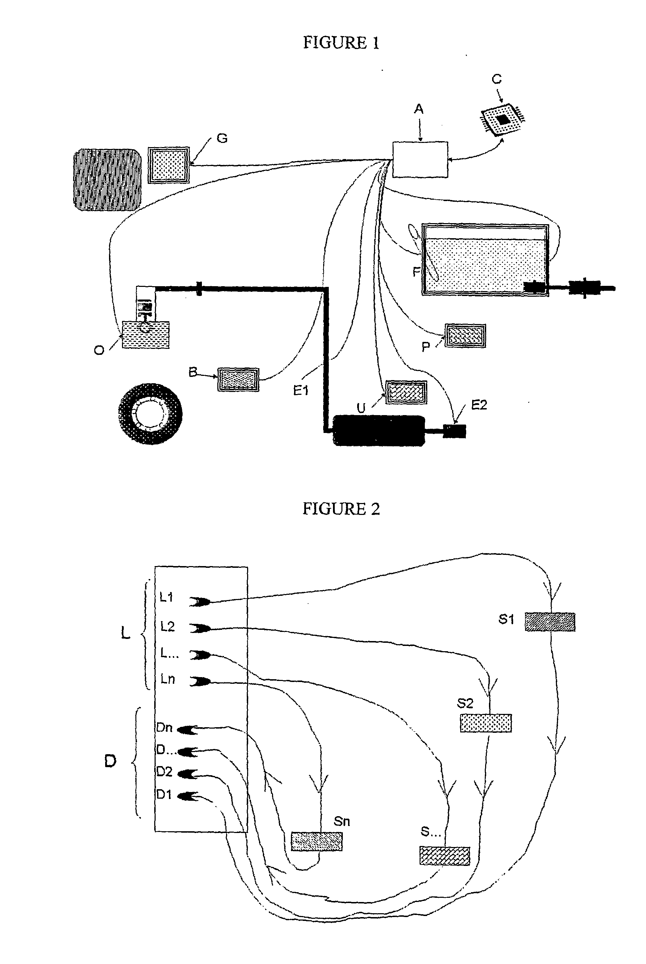

La figure 1 décrit une vue d'ensemble d'un système permettant d'analyser différents fluides (F, P, U, B, O, G) nécessaires au bon fonctionnement d'un moteur thermique et d'un véhicule à partir d'un analyseur centralisé (A) relié aux différents échantillons par l'intermédiaire de fibres optiques. Cet analyseur centralisé (A) permet de mettre en commun certains composants électroniques et ou optiques.

L'alimentation de ou des sources et du ou des détecteurs par exemple peut être unique. La même source lumineuse et ou le même détecteur peuvent aussi être utilisés pour collecter les spectres Ultra violet, visible et proche infrarouge des différents fluides.

Le boîtier incluant ce système d'analyse est lui aussi commun. La connectique et l'interface de l'analyseur centralisé vers l'ordinateur en charge du contrôle moteur (C) permettent de faire transiter l'information qualitative mesurée pour chacun des différents fluides sont uniques.

Le système électronique ou numérique en charge du pilotage de l'analyseur centralisé et ou de la détermination de la qualité des différents fluides à partir de leur spectre proche infrarouge peut aussi être unique.

Un tel dispositif de centralisation des mesures et de l'information qualitative embarquée offre ainsi l'avantage de minimiser l'encombrement et le surpoids induit par l'ajout de capteur.

Dans le mode de réalisation représenté, les moyens d'analyse sont disposés pour analyser le carburant (F), l'huile de lubrification moteur (O), des gaz d'échappement (E2), de l'air admis (E1) , des différents réactifs et catalyseurs de post traitement (U, P), du liquide de refroidissement du moteur (B) et du liquide de frein (G).

La figure 2 décrit une réalisation particulière d'architecture optique permettant d'utiliser plusieurs sources lumineuses (L1, L2, L..., Ln) et plusieurs détecteurs (D1, D2, D..., Dn). Le faisceau de lumière issu de chacune des différentes sources lumineuses (L1, L2, L..., Ln) est dirigé dans des fibres optiques ou dans des torons de fibres optiques distincts. La lumière en sortie de chaque fibre optique ou du toron de fibres optiques traverse un échantillon (S1, S2, S..., Sn) distinct de fluide nécessaire au bon fonctionnement du moteur et ou du véhicule.

Le faisceau de lumière transmis en sortie de chaque échantillon de fluides distincts est ensuite dirigé vers des détecteurs (D1, D2, D..., Dn) propres à chaque fluide analysé ceci soit par l'intermédiaire de fibre optique soit directement.

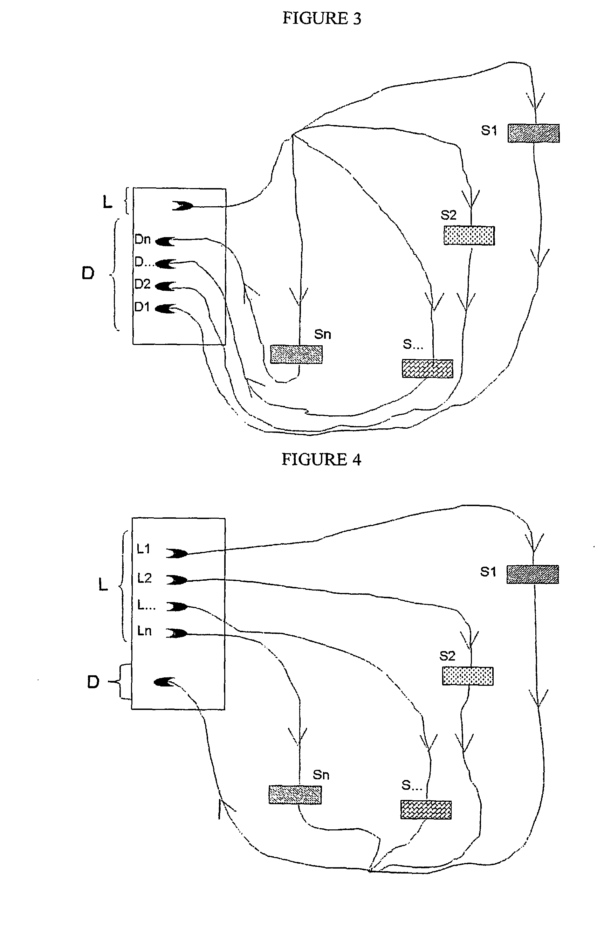

La figure 3 décrit une réalisation particulière d'une architecture optique permettant d'utiliser une source lumineuse commune (L) et plusieurs détecteurs (D1, D2, D..., Dn).

La lumière issue de la source lumineuse commune (L) est dirigée dans une fibre optique ou un toron de fibres optiques commun. Le flux lumineux est ensuite divisé et chaque partie dirigée vers les différents systèmes d'échantillonnages des différents fluides (S1, S2, S..., Sn) nécessaires au bon fonctionnement du moteur thermique et ou du véhicule. La lumière transmise à travers chaque échantillon de fluides distincts est ensuite dirigée vers des détecteurs (D1, D2, D..., Dn) propres à chaque fluide analysé ceci soit par l'intermédiaire de fibre optique soit directement.

Cette architecture particulière offre l'avantage par rapport à celle décrite en figure 2 de minimiser l'encombrement dû aux sources lumineuses ainsi que de minimiser les problèmes potentiels liés à l'alignement entre les sources et les fibres ou les sources et les détecteurs.

La figure 4 décrit une réalisation particulière d'une architecture optique permettant d'utiliser plusieurs sources lumineuses (L1, L2, L..., Ln) et un seul détecteur commun (D).

La lumière issue de chacune des différentes sources lumineuses (L1, L2, L..., Ln) est dirigée dans des fibres optiques ou des torons de fibres optiques distincts. La lumière émise par chaque fibre optique ou toron de fibres optiques traverse un échantillon distinct de fluide (S1, S2, S..., Sn) nécessaire au bon fonctionnement du moteur et ou du véhicule. La lumière transmise à travers chaque échantillon de fluides distincts est ensuite dirigée vers un détecteur (D) commun.

Cette architecture particulière offre l'avantage par rapport à celle décrite en figure 2 de minimiser l'encombrement dû aux détecteurs ainsi que de minimiser les problèmes potentiels liés à l'alignement entre les détecteurs et les fibres.

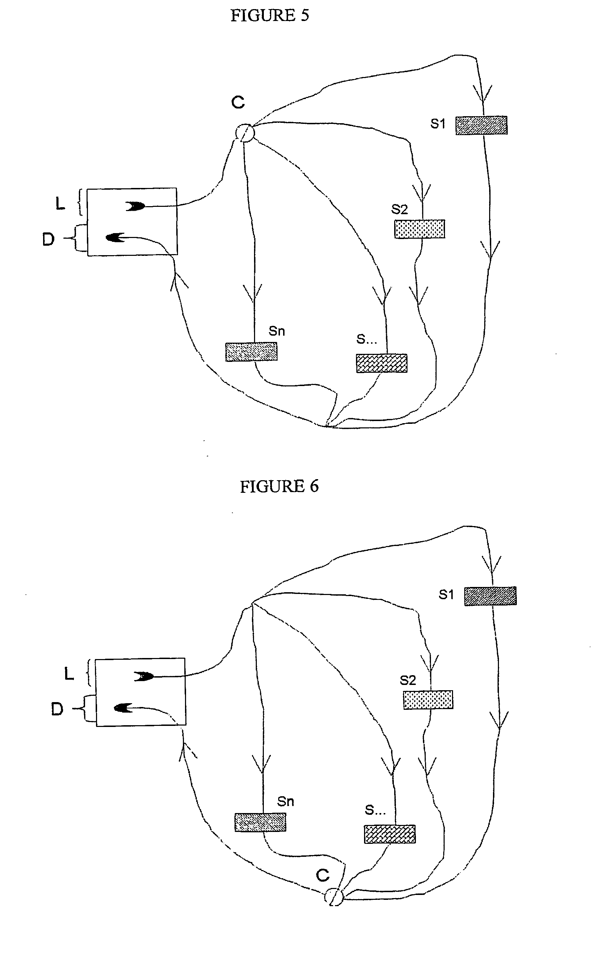

La figure 5 décrit une réalisation particulière d'une architecture optique permettant d'utiliser une source lumineuse commune (L) et un détecteur commun (D).

La lumière issue de la source lumineuse commune (L) est dirigée dans une fibre optique ou dans un toron de fibres optiques commun. La fibre optique ou le toron de fibres optiques est ensuite divisé et chaque partie dirigée vers les différents systèmes d'échantillonnages des différents fluides nécessaires au bon fonctionnement du moteur thermique et ou du véhicule. Le flux lumineux est orienté vers un flux particulier par l'intermédiaire d'un commutateur (C) de type micromécanique, MEMS à membrane ou micro miroir mobile. La lumière émise traverse un échantillon particulier d'un des fluides (S1, S2, S..., Sn) nécessaires au bon fonctionnement du moteur et ou du véhicule. La lumière transmise à travers de cet échantillon de fluide est ensuite dirigée vers un détecteur commun (D). Le pilotage du commutateur (C) permet de sélectionner le fluide à analyser.

Cette architecture particulière offre l'avantage par rapport à celles décrites en figure 2, 3 et 4 de minimiser l'encombrement dû aux détecteurs et due aux sources lumineuse ainsi que de minimiser les problèmes potentiels liés à l'alignement entre les sources lumineuses et les fibres et entre les détecteurs et les fibres.

La figure 6 décrit une réalisation particulière d'une architecture optique permettant d'utiliser une source lumineuse commune (L) et un détecteur commun (D).

La lumière issue de la source lumineuse commune (L) est dirigée dans une fibre optique ou un toron de fibres optiques commun. Le flux lumineux est ensuite divisé et chaque partie dirigée vers les différents systèmes d'échantillonnages des différents fluides (S1, S2, S..., Sn) nécessaires au bon fonctionnement du moteur thermique et ou du véhicule. La lumière transmise à travers chaque échantillon de fluides distincts est ensuite dirigée vers un commutateur (C) de type micromécanique, MEMS à membrane ou micro miroir mobile permettant de sélectionner le flux lumineux à transmettre au détecteur commun (D). Le pilotage du commutateur (C) permet de sélectionner le fluide à analyser.

Cette architecture particulière offre les mêmes avantages que l'architecture décrite dans le mode de réalisation particulier de la figure 5.

Les architectures décrites en figure 2 et 3 permettent d'analyser les différents flux simultanément.

Les architectures décrites en figures 2 et 4 permettent d'analyser chaque flux de manière indépendante et séquentielle en pilotant (allumer/éteindre) les différentes sources lumineuses.

Les architectures décrites en figures 5 et 6 permettent d'analyser chaque flux de manière indépendante et séquentielle en pilotant le commutateur.

Les architectures 2 et 3 offre la flexibilité d'utiliser ou non des fibres optiques entre les échantillons et les détecteurs.

Le système d'analyse des signaux détectés est un programme informatique gérant le spectromètre. Le programme est unique et commun aux différents flux. Ce programme permet de s'assurer du bon fonctionnement les différents modules (sources et détecteurs notamment) du système ainsi que d'acquérir les spectres ultra violet, visible et proche infrarouge des différents flux.

Le programme permettant de caractériser qualitativement chaque flux à partir de ses spectres ultra violet, visible et proche infrarouge comprendra les calibrations et les traitements mathématiques et numériques propre à chacun des flux analysés. L'interface entre les moyens d'analyse et le calculateur de contrôle moteur est centralisée et commun aux différents fluides analysés.

Le calculateur de contrôle moteur pourra commander le déclenchement d'une analyse particulière, d'une séquence d'analyse ou une analyse simultanée des fluides.

## Revendications

1. Dispositif de gestion centralisée des mesures et des informations relatives à des flux liquides et/ou gazeux nécessaires au bon fonctionnement d'un moteur thermique contrôlé par un calculateur moteur, ledit dispositif comprenant des moyens d'analyse d'au moins deux flux liquides et/ou gazeux incluant au moins une source lumineuse, au moins un détecteur optique de signaux et au moins un système d'analyse des signaux détectés, ledit dispositif étant **caractérisé en ce qu'**au moins un desdits moyens d'analyse est agencé pour être utilisé pour l'analyse de deux desdits flux.

2. Dispositif selon la revendication 1, **caractérisé en ce que** les moyens d'analyse sont disposés sur une plateforme unique.

3. Dispositif selon l'une des revendications 1 ou 2, **caractérisé en ce qu'**il comprend une interface unique de communication avec ledit calculateur moteur, la connectique physique et/ou numérique avec le calculateur étant commune aux moyens d'analyse.

4. Dispositif selon l'une quelconque des revendications 1 à 3, **caractérisé en ce que** les moyens d'analyse sont des moyens spectroscopiques ultraviolet, visible ou proche infrarouge ou une combinaison de ces moyens spectroscopique.

5. Dispositif selon la revendication 4, **caractérisé en ce que** l'analyse spectroscopique ultraviolet, visible et proche infrarouge est continue ou discontinue et réalisée dans la gamme de longueur d'onde comprise entre 190nm et 2500nm.

6. Dispositif selon l'une des revendications 1 à 5, **caractérisé en ce que** les moyens d'analyse des flux liquides et/ou gazeux sont des moyens d'analyse du carburant,de l'huile de lubrification moteur, des gaz d'échappement, de l'air admis, des différents réactifs et catalyseurs de post traitement, du liquide de refroidissement du moteur et du liquide de frein.

7. Dispositif selon l'une des revendications 1 à 6, **caractérisé en ce qu'**il comprend des moyens pour analyser un même flux liquide ou gazeux à différents endroits.

8. Dispositif selon l'une des revendications 1 à 7, **caractérisé en ce que** les différents flux sont analysés de manière séquentielle ou simultanée.

9. Dispositif selon l'une des revendications 1 à 8, **caractérisé en ce qu'**il est équipé de moyens de réception d'instructions de gestion des moyens d'analyse provenant du calculateur moteur.

10. Dispositif selon l'une des revendications 1 à 9, **caractérisé en ce que** les moyens d'analyse sont alimentés par une alimentation électrique commune.

11. Dispositif selon l'une des revendications 1 à 10, **caractérisé en ce que** qu'il comprend un système commun, électronique ou numérique, de pilotage des moyens d'analyse.

12. Dispositif selon l'une des revendications 1 à 11, **caractérisé en ce que** les moyens d'analyse incluent une source lumineuse commune pour l'analyse des flux liquides et/ou gazeux.

13. Dispositif selon l'une des revendications 1 à 12, **caractérisé en ce que** les moyens d'analyse incluent un détecteur commun pour l'analyse des flux liquides et/ou gazeux.

14. Dispositif selon les revendications 12 et 13, **caractérisé en ce que** la source lumineuse et le détecteur sont communs à l'ensemble des flux.

15. Dispositif selon la revendication 14, **caractérisé en ce qu'**il comprend un commutateur permettant de procéder séquentiellement à l'analyse des flux liquides et/ou gazeux.

16. Dispositif selon la revendication 15, **caractérisé en ce que** le commutateur est un commutateur micromécanique MEMS à membrane ou micro-miroir mobile, permettant d'orienter successivement le flux lumineux, et disposé entre la source et les flux liquides et/ou gazeux ou entre les flux liquides et/ou gazeux et le détecteur.

17. Dispositif selon l'une des revendications 1 à 11, **caractérisé en ce que** les moyens d'analyse comprennent, pour chaque flux liquide et/ou gazeux, une source et un détecteur distinct.

18. Véhicule **caractérisé en ce qu'**il est équipé d'un dispositif de gestion selon l'une des revendications 1 à 17.

## Claims

1. A device for the centralized management of measurements and information relating to liquid and/or gaseous streams required for the efficiency of a heat engine controlled by an engine calculator, said device comprising means for analyzing at least two liquid and/or gaseous streams including at least a light source, at least an optical signal detector and at least a system for analyzing the detected signals, said device being **characterized in that** at least one of said analysis means is arranged to be used for analyzing two of said streams.

2. The device according to claim 1, **characterized in that** the analysis means are disposed on a unique platform.

3. The device according to one of claims 1 or 2, **characterized in that** it comprises a unique communication interface with said engine calculator, the physical and/or digital connection with the calculator being common to the analysis means.

4. The device according to any one of claims 1 to 3, **characterized in that** the analysis means are near infrared, visible or UV spectroscopic means or a combination of these spectroscopic means.

5. The device according to claim 4, **characterized in that** the UV, visible and near infrared spectroscopic analysis is continuous or discontinuous and performed in a wavelength range comprised between 190 nm and 2500 nm.

6. The device according to one of claims 1 to 5, **characterized in that** the liquid and/or gaseous stream analysis means are means for analyzing fuel, engine lubricating oil, exhaust gas, intake air, various posttreatment reactants and catalysts, engine coolant and brake fluid.

7. The device according to one of claims 1 to 6, **characterized in that** it comprises means for analyzing a same liquid or gaseous stream at different locations.

8. The device according to one of claims 1 to 7, **characterized in that** the various streams are analyzed sequentially or simultaneously.

9. The device according to one of claims 1 to 8, **characterized in that** it is provided with command receiving means for receiving, from the engine calculator, commands for managing the analysis means.

10. The device according to one of claims 1 to 9, **characterized in that** the analysis means are powered through a common power supply.

11. The device according to one of claims 1 to 10, **characterized in that** it comprises an electronic or digital common system for driving the analysis means.

12. The device according to one of claims 1 to 11, **characterized in that** the analysis means include a common light source for the analysis of the liquid and/or gaseous streams.

13. The device according to one of claims 1 to 12, **characterized in that** the analysis means include a common detector for the analysis of the liquid and/or gaseous streams.

14. The device according to claims 12 and 13, **characterized in that** the light source and the detector are common to all streams.

15. The device according to claim 14, **characterized in that** it comprises a switch for sequentially proceeding with the liquid and/gaseous stream analysis.

16. The device according to claim 15, **characterized in that** the switch is a membrane type or movable micro-mirror type MEMS switch for successively aiming the light stream, and disposed between the source and the liquid and/or gaseous streams or between the liquid and/or gaseous streams and the detector.

17. The device according to one of claims 1 to 11, **characterized in that** the analysis means include, for each liquid and/or gaseous stream, separate source and detector.

18. A vehicle **characterized in that** it is provide with a management device according to one of claims 1 to 17.

## Patentansprüche

1. Vorrichtung zur zentralen Verwaltung der Messungen und der Informationen bezüglich flüssiger und / oder gasförmiger Ströme, die zum richtigen Betrieb eines Verbrennungsmotors notwendig sind, der von einem Motorrechner gesteuert wird, wobei die Vorrichtung Mittel zum Analysieren von mindestens zwei flüssigen und/oder gasförmigen Strömen umfasst, die mindestens eine Lichtquelle, mindestens einen optischen Signaldetektor und mindestens ein System zum Analysieren der erfassten Signale umfassen, wobei die Vorrichtung **dadurch gekennzeichnet ist, dass** mindestens eines der Analysemittel angeordnet ist, um zur Analyse von zweien der Ströme verwendet zu werden.

2. Vorrichtung nach Anspruch 1, **dadurch gekennzeichnet, dass** die Analysemittel auf einer einzigen Plattform angeordnet sind.

3. Vorrichtung nach einem der Ansprüche 1 oder 2, **dadurch gekennzeichnet, dass** sie eine einzige Kommunikationsschnittstelle mit dem Motorrechner umfasst, wobei die Analysemittel eine gemeinsame physikalische und/oder digitale Verbindung mit dem Rechner aufweisen.

4. Vorrichtung nach einem der Ansprüche 1 bis 3, **dadurch gekennzeichnet, dass** die Analysemittel ultraviolette, sichtbare oder nahinfrarote spektroskopische Mittel oder eine Kombination dieser spektroskopischen Mittel sind.

5. Vorrichtung nach Anspruch 4, **dadurch gekennzeichnet, dass** die ultraviolette, sichtbare und nahinfrarote spektroskopische Analyse kontinuierlich oder diskontinuierlich ist und in dem Wellenlängenbereich ausgeführt wird, der zwischen 190 nm und 2500 nm liegt.

6. Vorrichtung nach einem der Ansprüche 1 bis 5, **dadurch gekennzeichnet, dass** die Analysemittel der flüssigen und/oder gasförmigen Ströme Mittel zum Analysieren des Kraftstoffs, des Motorschmieröls, der Abgase, der Ansaugluft, der verschiedenen Reaktionsmittel und Katalysatoren zur Nachbehandlung, der Kühlflüssigkeit des Motors und der Bremsflüssigkeit sind.

7. Vorrichtung nach einem der Ansprüche 1 bis 6, **dadurch gekennzeichnet, dass** sie Mittel zum Analysieren desselben flüssigen oder gasförmigen Stroms an verschiedenen Stellen umfasst.

8. Vorrichtung nach einem der Ansprüche 1 bis 7, **dadurch gekennzeichnet, dass** die verschiedenen Ströme sequenziell oder gleichzeitig analysiert werden.

9. Vorrichtung nach einem der Ansprüche 1 bis 8, **dadurch gekennzeichnet, dass** sie mit Mitteln zum Empfangen von Anweisungen zur Verwaltung der Analysemittel aus dem Motorrechner ausgestattet ist.

10. Vorrichtung nach einem der Ansprüche 1 bis 9, **dadurch gekennzeichnet, dass** die Analysemittel durch eine gemeinsame Stromversorgung versorgt werden.

11. Vorrichtung nach einem der Ansprüche 1 bis 10, **dadurch gekennzeichnet, dass** sie ein gemeinsames elektronisches oder digitales System zum Ansteuern der Analysemittel umfasst.

12. Vorrichtung nach einem der Ansprüche 1 bis 11, **dadurch gekennzeichnet, dass** die Analysemittel eine gemeinsame Lichtquelle zur Analyse der flüssigen und/oder gasförmigen Strömen umfassen.

13. Vorrichtung nach einem der Ansprüche 1 bis 12, **dadurch gekennzeichnet, dass** die Analysemittel einen gemeinsamen Detektor umfassen, um die flüssigen und/oder gasförmigen Ströme zu analysieren.

14. Vorrichtung nach Anspruch 12 und 13, **dadurch gekennzeichnet, dass** die Lichtquelle und der Detektor für alle Ströme gemeinsam sind.

15. Vorrichtung nach Anspruch 14, **dadurch gekennzeichnet, dass** sie einen Schalter umfasst, der es ermöglicht, die Analyse der flüssigen und/oder gasförmigen Ströme sequenziell vorzunehmen.

16. Vorrichtung nach Anspruch 15, **dadurch gekennzeichnet, dass** der Schalter ein mikromechanischer MEMS-Schalter mit einer Membrane oder einem beweglichen Mikrospiegel ist, der es ermöglicht, den Lichtstrom nacheinander zu orientieren, und der zwischen der Quelle und den flüssigen und/oder gasförmigen Strömen oder zwischen den flüssigen und/oder gasförmigen Strömen und dem Detektor angeordnet ist.

17. Vorrichtung nach einem der Ansprüche 1 bis 11, **dadurch gekennzeichnet, dass** die Analysemittel für jeden flüssigen und/oder gasförmigen Strom eine unterschiedliche Quelle und einen unterschiedlichen Detektor umfassen.

18. Fahrzeug, **dadurch gekennzeichnet, dass** es mit einer Verwaltungsvorrichtung nach einem der Ansprüche 1 bis 17 ausgestattet ist.
